# EUROPEAN PATENT SPECIFICATION

(11) **EP 3 592 127 B1**
(45) Date of publication and mention of the grant of the patent: **15.02.2023**
(21) Application number: 18763775.6
(22) Date of filing: 07.03.2018
(51) Int. Cl.: A01C 13/00, A01B 39/08, A01C 23/02, A01C 21/00

(54) **FLUID COVERING IMPLEMENT**
FLUIDBEDECKUNGSEINRICHTUNG
OUTIL DE RECOUVREMENT DE FLUIDE

(30) Priority: 09.03.2017 US 201762469371 P; 04.05.2017 US 201762501598 P
(43) Date of publication of application: 15.01.2020
(73) Proprietor: Precision Planting LLC, Tremont, IL 61568 (US)
(72) Inventor: STOLLER, Jason, Eureka, Illinois 61530 (US); WILDERMUTH, Paul, Tremont, Illinois 61568 (US); RADTKE, Ian, Washington, Illinois 61571 (US); MUHLBAUER, Cory, Bloomington, Illinois 61705 (US)
(74) Representative: AGCO Intellectual Property Department
(86) International application number: PCT/US2018/021321
(87) International publication number: WO 2018/165282

(56) References cited:
- FR-A1- 3 036 019
- JP-A- H0 269 102
- JP-A- 2005 006 550
- JP-A- 2010 193 776
- JP-A- 2010 193 776
- US-A- 2 222 015
- US-A- 3 362 361
- US-A- 4 054 007
- US-A- 4 092 936
- US-A1- 2002 174 813
- US-A1- 2006 283 610
- US-A1- 2008 302 282
- US-A1- 2011 203 818
- US-A1- 2014 026 792
- US-A1- 2014 197 249

## Description

### TECHNICAL FIELD

Embodiments of the present disclosure relate to an implement for moving soil to cover applied fluids.

### BACKGROUND

There are liquid dispensing systems for dispensing liquids in the rhizosphere of plants. Examples of these systems are the Y-Drop applicator from 360 Yield Center and NutraBoss applicator from NutraBoss. These liquid dispensing systems apply fertilizer on the surface, and on their own, they can be subject to significant nutrient loss through volatilization.

JP H02 69102 A discloses an implement according to the preamble of claim 1.

### SUMMARY OF THE INVENTION

In accordance with a first aspect of the invention, there is provided an implement for depositing and covering fluid in a rhizosphere of plants growing in rows a field as defined in claim 1. Further optional features of the first aspect of the invention are set out in the claims dependent on claim 1.

### BRIEF DESCRIPTION OF THE DRAWINGS

The present disclosure is illustrated by way of example, and not by way of limitation, in the figures of the accompanying drawings and in which:
Figure 1 shows top view of a fluid covering implement having two discs disposed on an axle according to one embodiment.
Figure 2 shows a top view of a fluid covering implement having two discs offset from each other on different axles according to one embodiment.
Figure 3 shows top view of a fluid covering implement having two discs each disposed on separate supports .
Figure 4A shows a side elevation view of the embodiment of Figure 1 and including a biasing member.
Figure 4B shows a modification of the embodiment of Figure 4A and including a ski disposed under the support member ahead of the disc.
Figure 4C shows a modification of the embodiment of Figure 4B with the ski attached to the end of the support member.
Figure 4D shows a modification of the embodiment of Figure 4A and including a wheel ahead of the disc on the support member.
Figure 4E shows a modification of the embodiment of Figure 4D with the wheel behind the disc on the support member.
Figure 5 shows perspective view of a fluid covering implement disposed on a fluid application apparatus.
Figure 6A shows a side elevation view of fluid covering implement disposed on coulter mounting bracket.
Figure 6B is a front elevation view of the embodiment of Figure 6A.
Figure 7A shows a side elevation view of a disc and depth guide according to one embodiment.
Figure 7B shows a top view of the embodiment of Figure 7A and further including a deflector according to one embodiment.
Figure 8 shows a top view of a fluid covering implement with a plow according to one embodiment.
Figure 9 shows a top view of a fluid covering implement with knives according to one embodiment.
Figure 10 shows a perspective view of offset discs with depth guides and deflector according to one embodiment.
Figure 11A shows a side view of a fluid covering implement disposed on a beam that is connected to a frame through a support member according to one embodiment.
Figure 11B is a partial top view of the beam and discs of Figure 11A.
Figure 12 shows perspective view of a fluid covering implement disposed on a fluid application apparatus .
Figure 13A shows perspective view of a fluid covering implement disposed on a fluid application apparatus.
Figure 13B is a side elevation view of the soil roughener of Figure 13A.
Figure 14 shows perspective view of a fluid covering implement disposed on a fluid application apparatus.
Figure 15 illustrates a method for covering fluid deposited in the rhizosphere of plants growing in a field .

### BRIEF SUMMARY

Embodiments of the present disclosure relate to an implement for moving soil from between rows of plants to at least the rhizosphere of the plants to cover fluid that is deposited in the rhizosphere as defined in claim 1.

### DETAILED DESCRIPTION

Fluids (such as liquids or gases) can be applied to the rhizosphere of plants 5 to deliver fluids such as fertilizer, insecticide, or herbicides to the rhizosphere or in direct contact with plants 5. Examples of implements that apply fluids to the rhizosphere can be found in U.S. Patent Application Nos. 62/324,095; 62/365,824; and 62/442,895 and in U.S. Patent Application Publication Nos. US2013043326, US20170049043, and US20160120117. Because of volatilization, these implements are generally limited in the types of fluid that can be applied. While any fluid could be applied with these implements, fluids that are volatile or evaporate before the fluid is absorbed into the soil are less favored because of fluid loss. These implements are disposed in-between rows of growing crops. For simplicity, these implements are illustrated in the Figures having tubes 7-1 and 7-2 for applying fluid.

The fluid covering implement 100 moves soil from between the rows of growing plants 5 and covers fluids that are applied at least to the rhizosphere of plants 5. In another embodiment, fluid covering implement moves soil from between the rows of growing plants 5 to 0 to 5 inches (0 to 12.7 cm) from the plants 5. In other embodiments, the soil is moved to 0 to 4 inches (0 to 10.2 cm), 0 to 3 inches (0 to 7.6 cm), 0 to 2 inches (0 to 5.1 cm), or 0 to 1 inch (0 to 2.5 cm) from the plants 5. In another embodiment, fluid covering implement 100 moves soil from between the rows of growing plants 5 such that the moved soil is in contact with the plants 5.

Fluid covering implement 100 includes a soil mover 110 (or soil moving implement 110) that moves soil from between the rows of crops to cover soil on one or both sides of the row. Soil mover 110 can be a disc 111, a plow 112, or a knife 113. In one example, a soil moving implement includes at least one disc, plow, or knife that are positioned or disposed in a middle region 108 between rows of plants. An edge or boundary of the middle region is a certain distance (e.g., 3-15 inches (7.6-38.1 cm)) from each rhizosphere of the rows of plants depending on the spacing of rows of plants. The soil moving implement moves soil from the middle region to cover soil of the rhizosphere.

Disc 111 can be any shaped coulter disc or cleaning wheel. Examples of discs and cleaning wheels include, but are not limited to, flat, notched, fluted, wavy, rippled, spiked, flat with spikes, notched with spikes, fluted with spikes, wavy with spikes, and rippled with spikes.

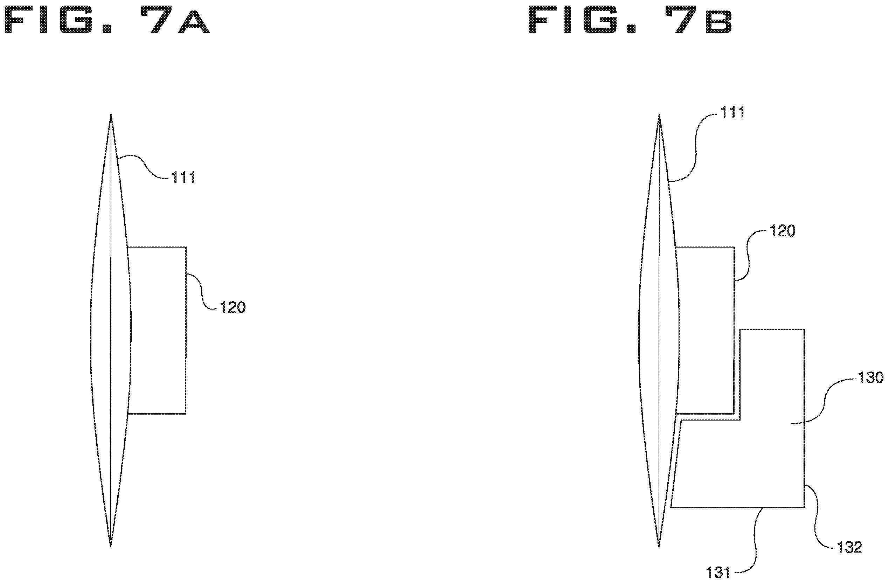

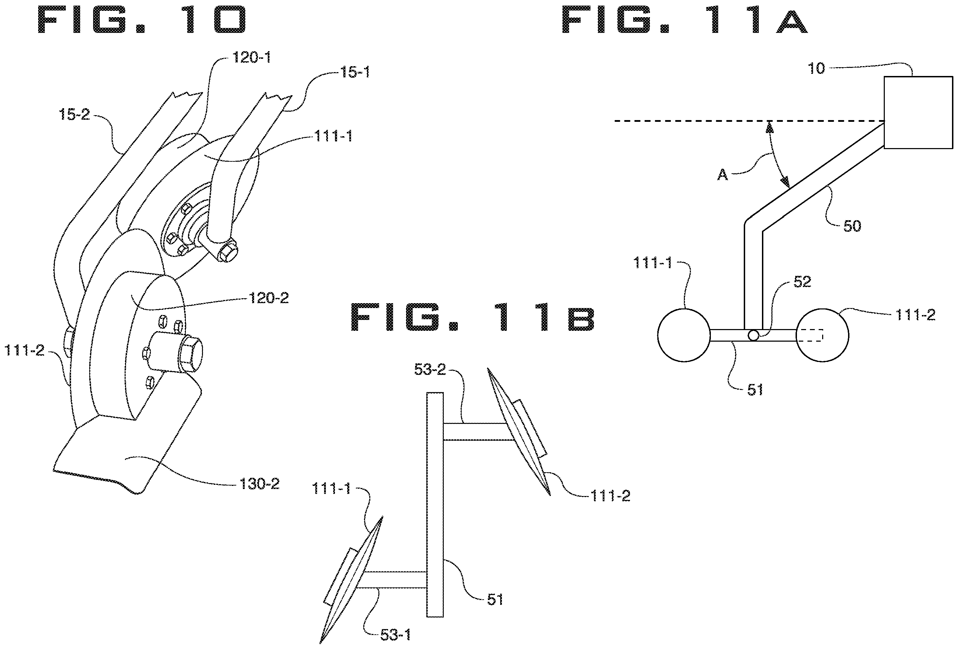

To regulate the depth that disc 111 penetrates the soil, disc 111 can further include a depth guide 120. Depth guide 120 is illustrated in Figures 7A, 7B, and 10. Any of the discs 111 in any embodiment described herein can have a depth guide 120. Depth guide 120 is a cylinder having a diameter that is less than the diameter of disc 111. The greater the difference in diameter determines the depth that disc 111 can penetrate the soil.

Disc 111 and depth guide 120 can be made as a unitary part, or they can be separate parts.

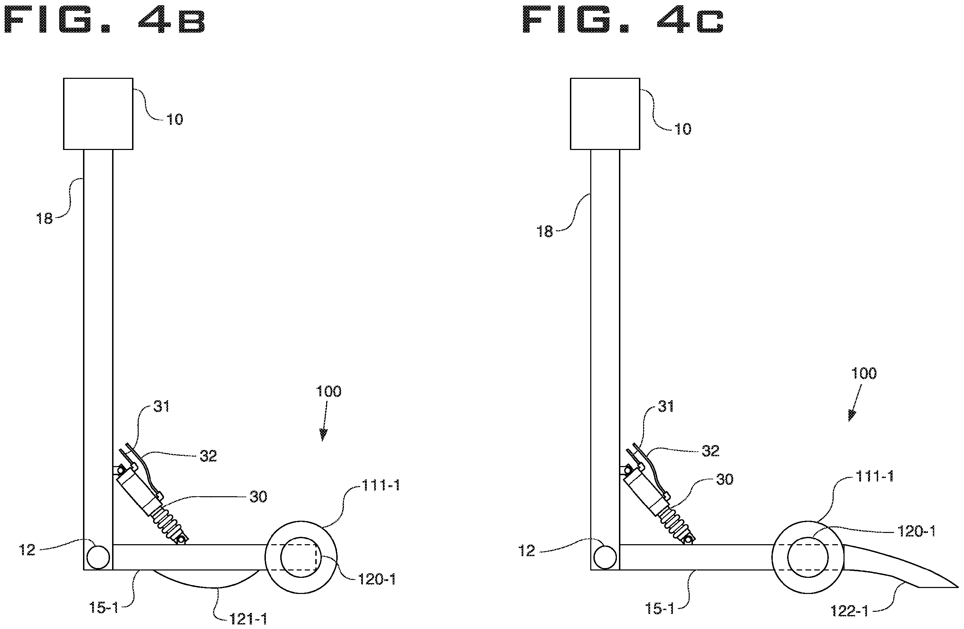

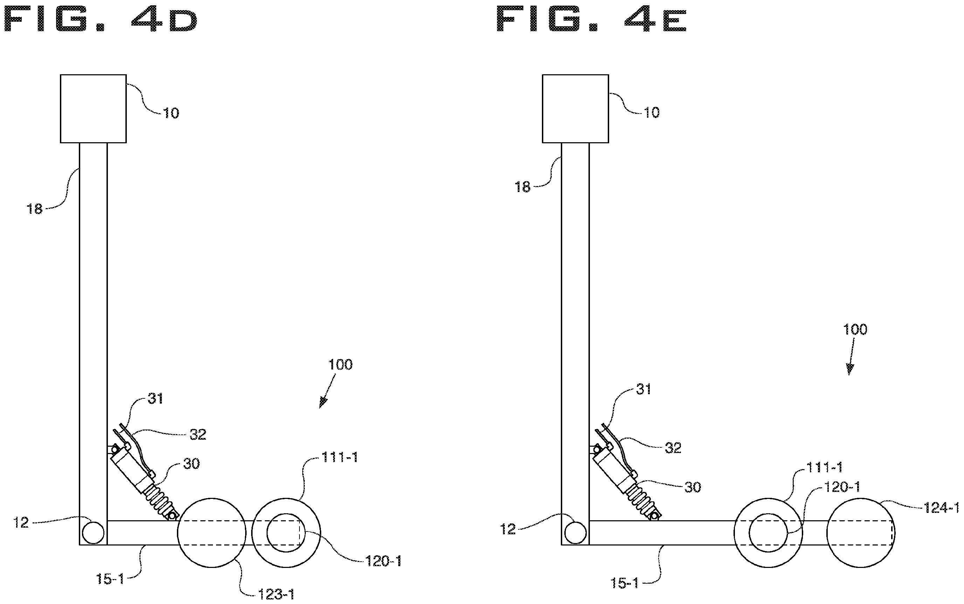

In addition to or individually from depth guide 120, support member 15 can additionally contain a ski (121 or 122) or a wheel (123 or 124) to regulate the depth that disc 111 penetrates the soil. Illustrated in Figure 4B, ski 121-1 is disposed under support member 15 ahead of disc 111. Illustrated in Figure 4C, ski 122-1 is disposed at the end of support member 15 behind disc 111. Illustrated in Figure 4D, wheel 123-1 is disposed on support member 15 ahead of disc 111. Illustrated in Figure 4E, wheel 124-1 is disposed on support member 15 behind disc 111.

Disc 111 can be adjusted to adjust one or more of camber angle, toe angle, and depth to adjust the distance that soil is moved from between the rows to the rhizosphere or to the plants 5 and/or the amount of soil that is moved. Also, the diameter of disc 111 can be adjusted to change the amount of soil that is moved.

Plow 112 can be any shaped plow blade or moldboard.

In another embodiment, fluid covering implement 100 further includes a deflector 130. Deflector 130 can keep the soil from being thrown too high or too far. As illustrated in Figures 7B and 10, deflector 130 can be disposed adjacent to disc 111 in the direction of soil movement. Deflector 130 can have any shape to deflect the soil. Deflector 130 can be disposed at any rotational angle with respect to a transverse plane passing through disc 111 transverse to the direction of travel. This allows for the adjustment of the height of the side edge 132 of deflector 130 from the ground. Deflector 130 can be disposed at any rotational angle with respect to a plane aligned with the direction of travel. This allows for the adjustment of the height of the rear edge 131 of deflector 130 from the ground. Side edge 132 and/or rear edge 131 can have a surface that is curved towards the ground.

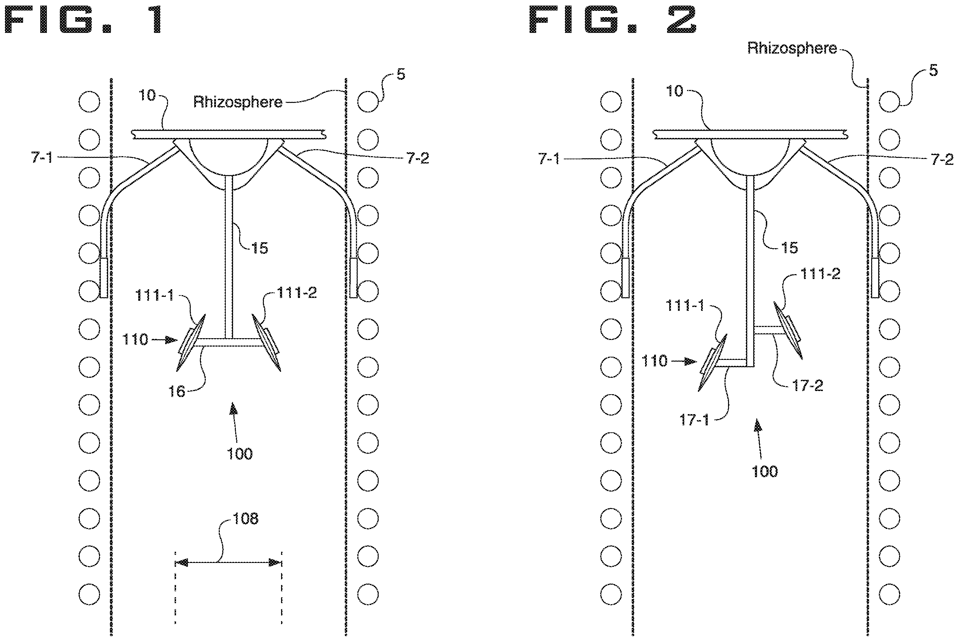

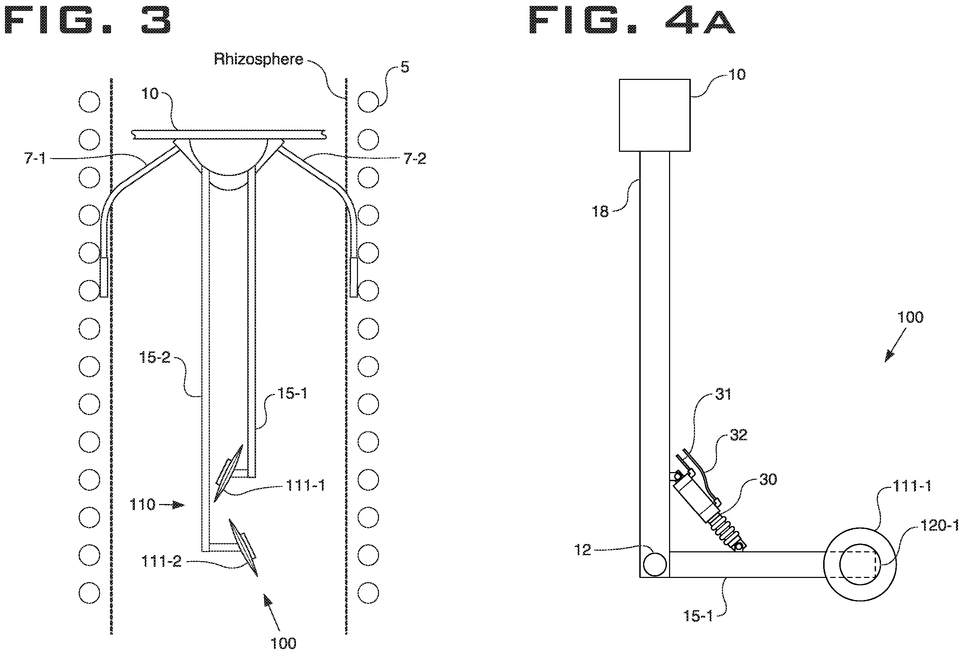

Fluid covering implement 100 can be installed on any implement that dispenses fluids to row crops. Examples of implements include, but are not limited to, sprayers, high clearance sprayers, side dress toolbars, planter row units, planter row unit toolbars, and cultivator toolbars. Figures 1 to 4 illustrate attachment of the fluid covering implement 100 to the frame 10 of an implement (such as a toolbar, a boom, a toolbar on mounted to a boom). Figures 1 to 3 are top plan views, and Figures 4A to 4E are side elevation views of the embodiment of Figure 1 with the liquid application removed. Any of the embodiments in Figures 2 to 3 can be attached to frame 10 the same as is shown in any of Figures 4A to 4E.

A vertical member 18 is attached to frame 10 and extends down towards the soil. A support member 15 is attached to vertical member 18 at the end opposite of frame 10. This attachment is pivotable. Illustrated in Figures 4A to 4E is pivot 12. Support member 15 extends rearward opposite the direction of travel. The length of support member 15 is sufficient to have soil mover 110 disposed after fluid is applied to the row crops so that soil can be moved to cover the fluid. Figure 1 illustrates discs 111-1 and 111-2 disposed on an axle 16 through support member 15. Figure 2 illustrates offset discs 111-1 and 111-2 independently attached with axles 17-1 and 17-2 to support member 15. Figure 3 illustrates that discs 111-1 and 111-2 can be independently attached to their own vertical member 18-1 and 18-2 (not shown) and support member 15-1 and 15-2, respectively. While support members 15-1 and 15-2 can have the same length, one support member 15-1 or 15-2 can be longer so that discs 111-1 and 111-2 can be disposed in line with each other to save space when there are narrow rows.

A biasing member 30 is disposed between vertical member 18 and support member 15 to urge support member 15 and discs 111 to the ground. Biasing member can be any device that applies a force. Examples include, but are not limited to, springs, air cylinders, hydraulic cylinders, or actuators. In some embodiments, the biasing member can apply both a down force and a lift force on support member 15. Lift force is useful to lift support member 15 to disengage ground contact, such as when making a turn. In one embodiment, biasing member is a dual acting air cylinder that applies both a down force and a lift force. An example of a dual acting air cylinder is described in U.S. Patent No. 8,550,020. Another example is CleanSweep^{™} air cylinders available from Precision Planting LLC. Biasing member 30 can be actuated implement wide, section wide, or row by row. Biasing member 30 is illustrated in Figures 4A to 4E with the dual acting air cylinder from US8550020 having air lines 31 and 32.

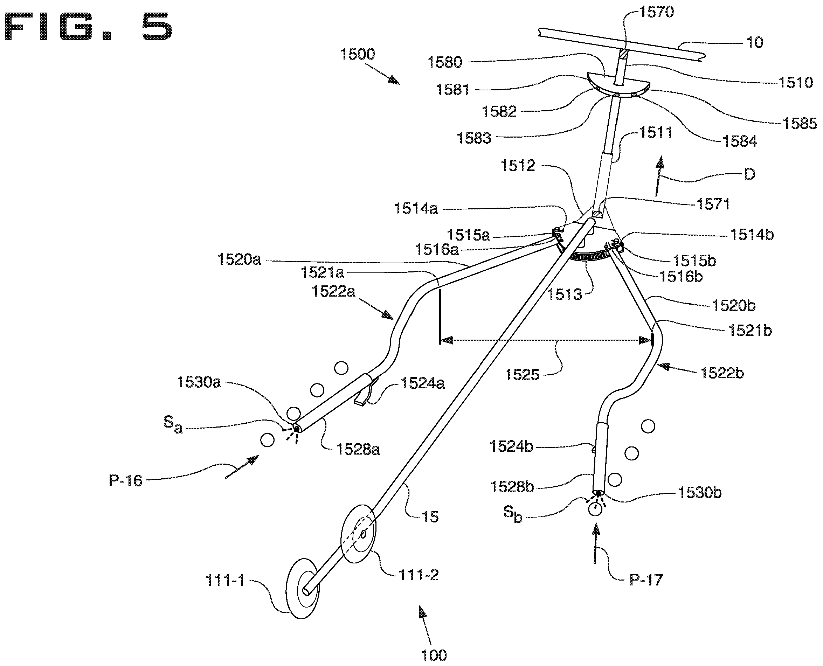

In another example, support member can be connected to a fluid application unit. Figure 5 illustrates application unit 1500, which is described in U.S. Application No. 62/442,895. Figure 5 illustrates an isometric view of an application unit 1500 in accordance with one example. The application unit 1500 is preferably mounted to a transversely extending bar 10 (e.g., toolbar or boom) drawn by a tractor or other implement. A frame 1510 (e.g., rigid frame 1510) is coupled to the bar 10, a frame 1511 (flexible frame, rigid frame), and a base 1512. It should be appreciated that frame 1510 and 1511 could be a unitary part. The base 1512 includes a biasing element 1513 (e.g., spring) to bias or position linkage members 1520a, 1520b such that distal ends 1521a, 1521b of the linkage members 1520a, 1520b have a spacing 1525 that is similar to a row spacing of the rows of plants P-16, P-17. In one example, the application unit 1500 includes ground contacting members 1524a, 1524b (e.g., ski, skid, wear element, etc.) at least partially contacting the ground while in operation with the application unit 1500 moving in a direction D that is substantially parallel with respect to rows of plants P-16 and P-17. The ground contacting members 1524a, 1524b substantially prevent the flexible members 1522a, 1522b from contacting the ground and thus reduce wear on the flexible members 1522a, 1522b. The ground contacting members 1524a, 1524b also position the flexible members 1522a, 1522b to be slightly elevated (e.g., 0 to 3 inches (0 to 7.6 cm)) above the ground.

Fluid outlets 1530a, 1530b (e.g., spray nozzle, drip mechanism) are positioned with respect to a distal portion 1528a, 1528b of flexible members 1522a, 1522b for spraying a fluid in close proximity to the plants. In one example, the fluid outlets are positioned at a distal end of the distal portions of the flexible members and generate a spray Sa, Sb that sprays in a downward direction towards a base region of plants P-16, P-17, respectively. It should be appreciated that each fluid outlet in the various embodiments described herein is preferably in fluid communication with a fluid source (e.g., tank) containing an application (e.g., fluid application, crop inputs such as fertilizer, fungicide, herbicide or insecticide). The base 1512 also includes pins 1514a, 1514b positioned in holes to set a width for biasing of the linkage members for different crop row spacing. The base 1512 includes additional holes 1515a, 1515b and 1516a, 1516b to reduce a width of the linkage members 1520a, 1520b to adjust for different crop row spacing or for different types of crops. For a turn of a tractor and an implement having a plurality of application units 1500, the biasing element and pins cause the flexible members to flex inwards. Optionally, a rotating swivel 1570 or 1571 can be disposed between bar 10 and frame 1510 and/or between frame 1511 and base 1512. The degree of rotation can be any desired degree, but actual rotation will be limited by the movement in the rows. Having a rotating swivel 1570 or 1571 provides more flexibility during use to keep application unit 1500 in the row without providing too much force on the plants. Support member 15 is connected to frame 1511.

In another example, the application unit 1500 optionally includes a housing member 1580 for positioning a plurality of fluid outlets (e.g., 1581-1585) at a plurality of different angles (e.g., angled down towards ground, angle outwards from the housing member 1580) having a maximum range of approximately 180 degrees. Additional or fewer fluid outlets can be positioned with the housing member 1580. Each fluid outlet can have a fixed position or an adjustable angular position for spraying a fluid towards a base region of the plants or towards a certain target region between the rows of plants P-16, P-17. The fluid sprayed by the fluid outlets 1581-1585 can be the same fluid that is spraying by the fluid outlets 1530a, 1530b or this fluid can be different. In one example, the fluid outlets 1581-1585 spray a fungicide.

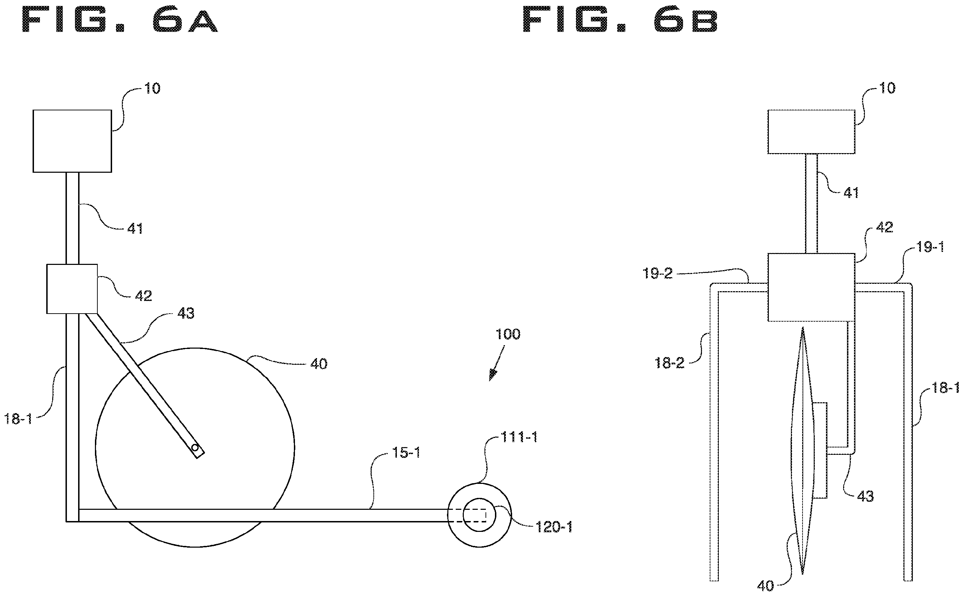

In an example not in accordance with the claimed invention, fluid covering implement 100 can be used on side dress bars that have a coulter 40. An example is illustrated in Figures 6A and 6B. In a typical side dress bar, coulter 40 is connected via a coulter mounting arm 43 to a bracket 42 then to a tool bar arm 41 that is connected to frame 10. Fluid covering implement 100 can attach to bracket 42 with side support arms 19-1 and 19-2 connected to vertical members 18-1 and 18-2, respectively, then to support members 15-1 and 15-2, respectively, each having discs 111-1 and 111-2 and depth guide 120-1 and 120-2, respectively.

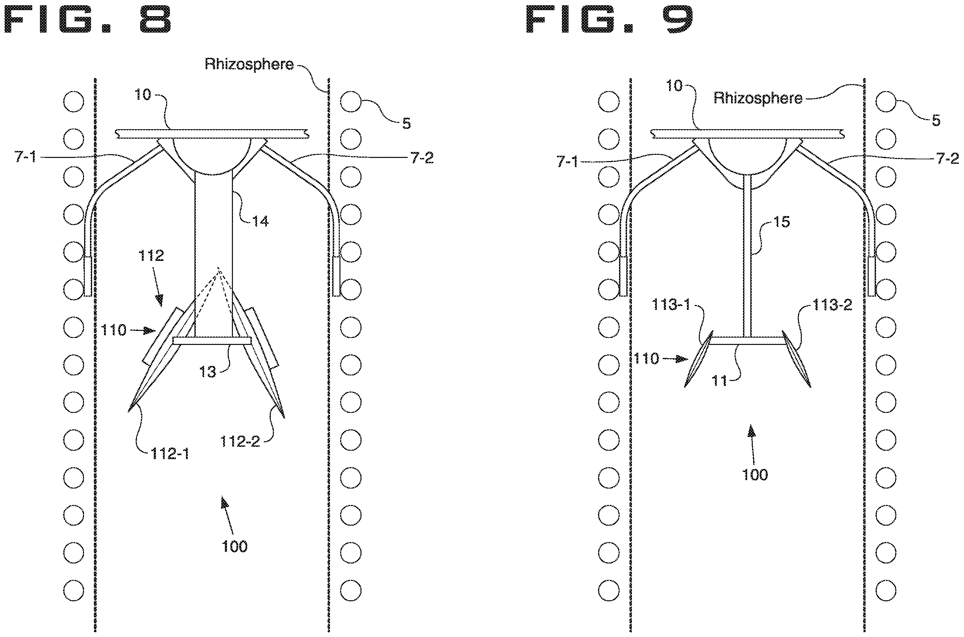

In another embodiment illustrated in Figure 8, plow 112 has plow blades 112-1 and 112-2. Support arm 14 is attached to frame 10 and extends rearward opposite the direction of travel. At the end opposite the frame 10, connecting member 13 is connected to support arm 14 and disposed downward between blow blades 112-1 and 112-2 and connected to plow blades 112-1 and 112-2.

In another embodiment illustrated in Figure 9, fluid covering implement 100 having knives 113-1 and 113-2. A vertical member 18 is attached to frame 10 and extends down towards the soil. A support member 15 is attached to vertical member 18 at the end opposite of frame 10. This attachment is pivotable. Support member 15 extends rearward opposite the direction of travel. The length of support member 15 is sufficient to have soil mover 110 disposed after fluid is applied to the row crops so that soil can be moved to cover the fluid. Figure 9 illustrates knives 113-1 and 113-2 disposed on a cross member 11 through support member 15. Similar to Figure 1, attachment to frame 10 can be the same as illustrated in any of Figures 4A to 4E.

Figure 10 shows a perspective view of offset discs with depth guides and deflector according to one embodiment. Discs 111-1 and 111-2 can be independently attached to their own vertical member 18-1 and 18-2 (not shown) and support member 15-1 and 15-2, respectively. To regulate the depth that discs 111-1 and 111-2 penetrate the soil, the discs can further include a depth guide 120-1 and 120-2. Deflector 130-2 can be disposed adjacent to disc 111-2 in the direction of soil movement.

In another embodiment illustrated in Figures 11A and 11B, a support member 50 is connected to frame 10 at one end and to a beam 51 at the other end. Beam 51 may fixedly or pivotably attached to support member 50. When pivotably attached, support member 50 and beam 51 are connected through pivot 52. Discs 111-1 and 111-2 are attached to beam 51 with axles 53-1 and 53-2, respectively. The angle A between the horizontal plane (parallel to the ground) and support member 50 can be adjusted to change the angle of penetration of discs 111-1 and 111-2 in the soil.

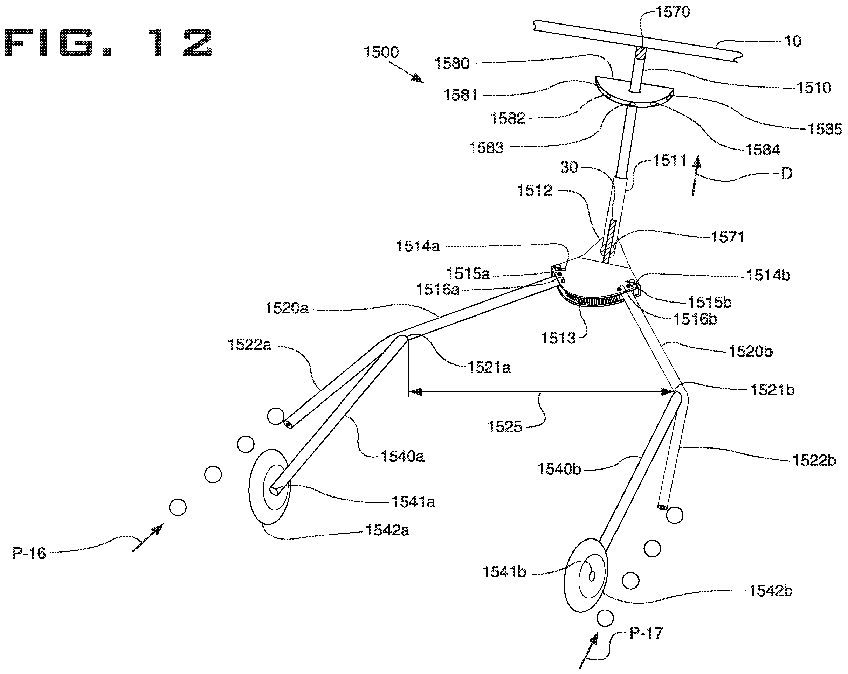

In another arrangement illustrated in Figure 12 which is not in accordance with the claimed invention, soil is not displaced from the middle of the row but rather adjacent to or in the rhizosphere. There may be instances when it is not desired to disturb the soil between the row, such as when an herbicide or insecticide has already been applied. This arrangement can minimize soil disturbance since soil does not have to be moved a great distance to cover fluid deposited in the rhizosphere. Figure 12 is a perspective view of a modification of application unit 1500, which is described in U.S. Application No. 62/442,895, and which is described above. Any of the discs 111 described above can be used as discs 1542a, 1542b in this embodiment. Discs 1542a, 1542b are connected to axles 1541a, 1541b, respectively, to extension 1540a, 1540b, respectively, which are connected to linkage members 1520a, 1520b, respectively. Extension 1540a, 1540b are of sufficient length so that discs 1542a, 1542b are disposed behind flexible members 1522a, 1522b, respectively, along a direction of travel. Linkage members 1520a, 1520b are sufficiently rigid to keep discs 1542a, 1542b adjacent to or in the rhizosphere. While illustrated with this embodiment, the assembly of discs 1542a, 1542b, axles 1541a, 1541b, and extensions 1540a, 1540b can be attached to other structures such that discs 1542a, 1542b are adjacent to or in the rhizosphere. Optionally, a biasing member 30 can be disposed between base 1512 and frame 1511 to bias the base 1512 and thus discs 1542a, 1542b to the ground.

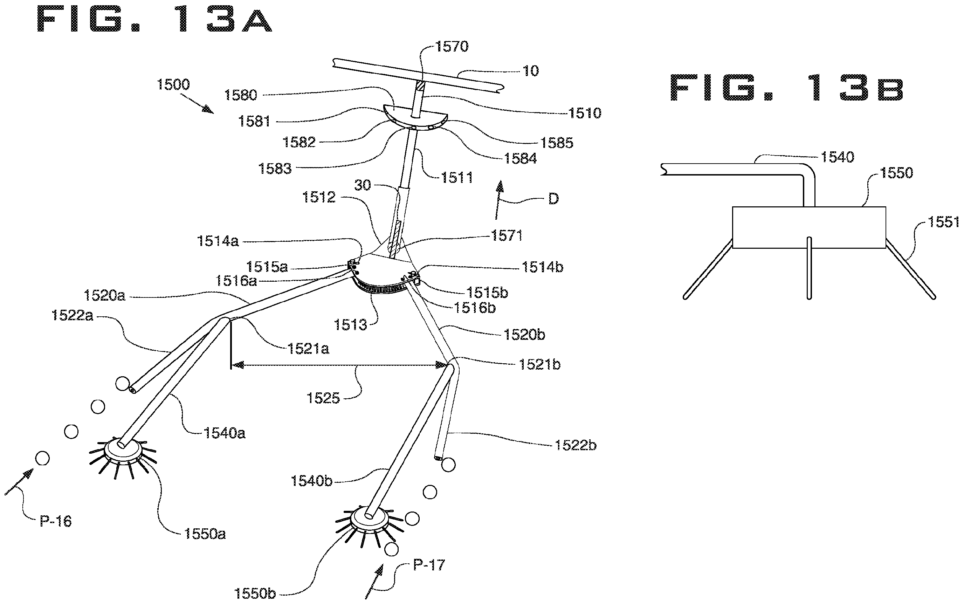

Illustrated in Figures 13A and 13B is another example not in accordance with the claimed invention in which discs 1542a, 1542b and axles 1541a, 1541b from Figure 12 are replaced with a soil roughener 1550a, 1550b. Soil roughener 1550a, 1550b are connected to extensions 1540a, 1540b, respectively. Figure 13B is a side elevation view of one soil roughener 1550 and extension 1540. Soil roughener 1550 is any structure that engages soil to loosen and move the soil to cover fluid. Illustrated in Figure 13B, soil roughener 1550 has spikes 1551 that extend down from soil roughener 1550 to engage with soil.

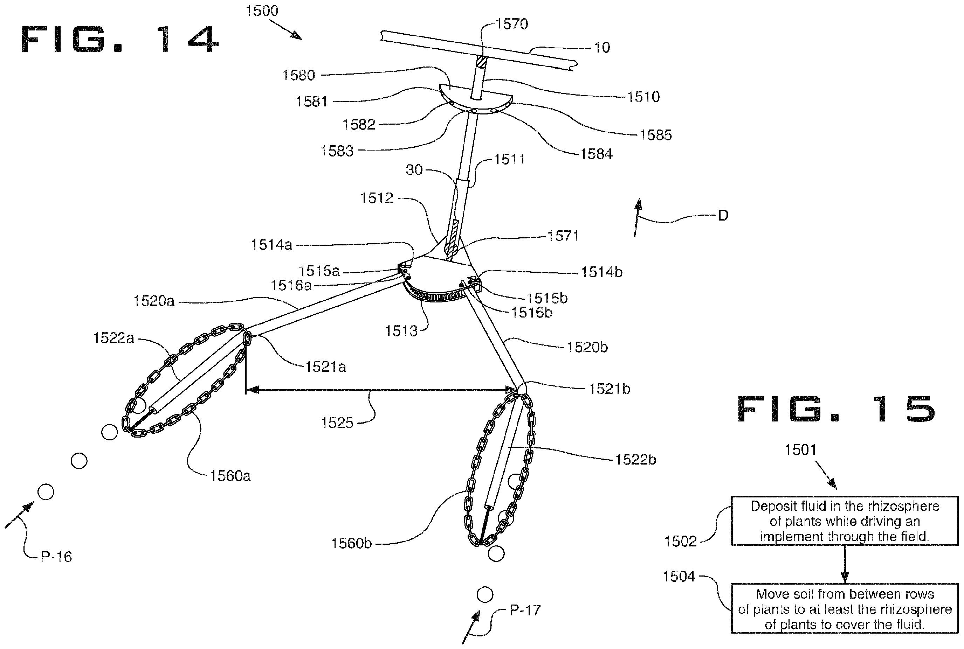

Figure 14 illustrates another example which is not in accordance with the claimed invention that includes drag chains 1560a, 1560b that are connected to linkage members 1520a, 1520b, respectively. The length of the chains 1560a, 1560b are sufficient so that the trailing loop of the chains 1560a, 1560b are disposed behind flexible members 1522a, 1522b, respectively, along a direction of travel.

Figure 15 illustrates a method 1501 for covering fluid deposited in the rhizosphere of plants growing in a field. In one example, an implement and a soil moving implement perform this method. At operation 1502, the method includes depositing fluid in the rhizosphere of plants while driving an implement through the field. At operation 1504, the method further includes moving soil from between rows of plants to at least the rhizosphere of plants to cover the fluid. The soil may be moved from a middle region to cover soil of the rhizosphere.

In one example, moving soil from between rows of plants to at least the rhizosphere of plants to cover the fluid comprises moving soil from a middle region between rows of plants to 0 to 5 inches (0 to 12.7 cm) from the plants.

In another example, moving soil from between rows of plants to at least the rhizosphere of plants to cover the fluid comprises moving soil from a middle region between rows of plants to 0 to 3 inches (0 to 7.6 cm) from the plants.

In another example, moving soil from between rows of plants to at least the rhizosphere of plants to cover the fluid comprises moving soil from being adjacent to a row of plants or in the rhizosphere as illustrated in Figures 12, 13A, and 14 to 0 to 5 inches (0 to 12.7 cm) from the plants.

## Claims

1. An implement for depositing fluid in the rhizosphere of plants growing in a field and for covering said fluid, the implement comprising:
a frame (10);
an implement (7) configured to dispense fluids; and
a soil moving implement (110) attached to the frame (10) and disposed in a middle region between a first row of plants and a second row of plants and configured to move soil from between the rows to at least the rhizosphere of the plants as the soil moving implement traverses the field, wherein the implement further comprises a vertical member (18) attached to the frame and extending down towards the soil and a support member (15) attached to the vertical member at the opposite end to the frame, the soil moving implement (110) disposed on the support member, the support member extending rearward opposite the direction of travel, the length of the support member configured sufficient to have the soil moving implement (110) disposed after fluid is applied to the row crops so that soil can be moved to cover the fluid;
**characterized by** the support member (15) being pivotably attached to the vertical member (18) and a biasing member (30) disposed between the vertical member and the support member to apply a force on the soil moving implement towards the soil.

2. The implement of claim 1, wherein the soil moving implement (110) comprises at least one disc (111) to move soil to at least the rhizosphere of the plants.

3. The implement of claim 2, further comprising a deflector (130) that is disposed adjacent to the at least one disc (111) in a direction of soil movement.

4. The implement of claim 1, wherein the soil moving implement (110) comprises at least one plow (112) to move soil to at least the rhizosphere of the plants.

5. The implement of claim 1, wherein the soil moving implement (110) comprises at least one knife (113) to move soil to at least the rhizosphere of the plants.

6. The implement of claim 1 further comprising a depth guide (120).

7. The implement of claim 6, wherein the soil moving implement (110) comprises at least one disc (111) to move soil to at least the rhizosphere of the plants, and the depth guide (120) comprises a cylinder disposed adjacent to the at least one disc.

8. The implement of claim 6, wherein the soil moving implement (110) comprises at least one disc (111) to move soil to at least the rhizosphere of the plants and the depth guide is a ski (121; 122) that is attached to the support member.

9. The implement of claim 8, wherein the ski (121) is disposed under the support member (15) and optionally is disposed on the support member (15) at a rearward end of the support member along a direction of travel.

10. The implement of claim 6, wherein the soil moving implement (110) comprises at least one disc (111) to move soil to at least the rhizosphere of the plants and the depth guide (120) is a wheel that is attached to the support member.

11. The implement of claim 6 further comprising a deflector (130) that is disposed adjacent to the depth guide (120) in a direction of soil movement.

12. The implement of claim 1, wherein the soil moving implement (110) comprises a first disc (111-1) for moving soil in a first direction and a second disc (111-2) for moving soil in a second direction opposite the first direction.

13. The implement of claim 12, wherein the first disc (111-1) is disposed forward of the second disc (111-2) along a direction of travel.

14. The implement of claim 1, wherein the biasing member (30) is configured to apply both a lift force and a down force on the support member (15).

15. The implement of claim 14, wherein the biasing member (30) is a dual acting air cylinder.

## Patentansprüche

1. Arbeitsgerät zum Aufbringen eines Fluids in den Wurzelraum von auf einem Feld wachsenden Pflanzen und zum Bedecken des Fluids, wobei das Arbeitsgerät das Folgende aufweist:
einen Rahmen (10);
ein zum Abgeben von Fluiden ausgebildetes Arbeitsgerät; und
ein Erde bewegendes Arbeitsgerät (110), das an dem Rahmen (10) befestigt und in einem mittleren Bereich zwischen einer ersten Reihe von Pflanzen und einer zweiten Reihe von Pflanzen angeordnet und geeignet ausgebildet ist, um zwischen den Reihen angeordnete Erde zu dem Wurzelraum der Pflanzen zu bewegen, wenn sich das Erde bewegende Arbeitsgerät über das Feld bewegt, wobei das Arbeitsgerät weiterhin ein vertikales Element (18), das an dem Rahmen befestigt ist und sich nach unten in Richtung der Erde erstreckt, und ein Lagerelement (15) aufweist, das an dem vom Rahmen abgewandten Ende an dem vertikalen Element befestigt ist, wobei das Erde bewegende Arbeitsgerät (110) auf oder an dem Lagerelement angeordnet ist, wobei sich das Lagerelement entgegengesetzt zur Fahrtrichtung nach hinten erstreckt und die Länge des Lagerelements so ausreichend ausgebildet ist, dass nach dem Aufbringen von Fluid auf die Erntegut-Reihen das Erde bewegende Arbeitsgerät (110) so angeordnet ist, dass Erde zum Bedecken des Fluids bewegt werden kann;
**dadurch gekennzeichnet, dass** das Lagerelement (15) schwenkbar an dem vertikalen Element (18) befestigt und ein Beaufschlagungselement (30) zwischen dem vertikalen Element und dem Lagerelement angeordnet ist, um eine Kraft in Richtung der Erde auf das Erde bewegende Arbeitsgerät aufzubringen.

2. Arbeitsgerät nach Anspruch 1, wobei das Erde bewegende Arbeitsgerät (110) mindestens eine Scheibe (111) zum Bewegen von Erde mindestens in den Wurzelraum der Pflanzen aufweist.

3. Arbeitsgerät nach Anspruch 2, weiterhin mit einem Deflektor (130), der in einer Richtung der Bewegung der Erde benachbart zu der mindestens einen Scheibe (111) angeordnet ist.

4. Arbeitsgerät nach Anspruch 1, wobei das Erde bewegende Arbeitsgerät (110) mindestens einen Pflug (112) zum Bewegen von Erde mindestens in den Wurzelraum der Pflanzen aufweist.

5. Arbeitsgerät nach Anspruch 1, wobei das Erde bewegende Arbeitsgerät (110) mindestens ein Messer (113) zum Bewegen von Erde mindestens in den Wurzelraum der Pflanzen aufweist.

6. Arbeitsgerät nach Anspruch 1, weiterhin mit einer Tiefenführung (120).

7. Arbeitsgerät nach Anspruch 6, wobei das Erde bewegende Arbeitsgerät (110) mindestens eine Scheibe (111) zum Bewegen von Erde mindestens in den Wurzelraum der Pflanzen aufweist, und wobei die Tiefenführung (120) einen benachbart zu der mindestens einen Scheibe angeordneten Zylinder aufweist.

8. Arbeitsgerät nach Anspruch 6, wobei das Erde bewegende Arbeitsgerät (110) mindestens eine Scheibe (111) zum Bewegen von Erde mindestens in den Wurzelraum der Pflanzen aufweist und die Tiefenführung (120) ein Ski (121; 122) ist, der an dem Lagerelement befestigt ist.

9. Arbeitsgerät nach Anspruch 8, wobei der Ski (121) unter dem Lagerelement (15) angeordnet und optional auf oder an einem hinsichtlich der Fahrtrichtung rückwärtigen Ende des Lagerelements auf oder an dem Lagerelement (15) angeordnet ist.

10. Arbeitsgerät nach Anspruch 6, wobei das Erde bewegende Arbeitsgerät (110) mindestens eine Scheibe (111) zum Bewegen von Erde mindestens in den Wurzelraum der Pflanzen aufweist und die Tiefenführung (120) ein Rad ist, das an dem Lagerelement befestigt ist.

11. Arbeitsgerät nach Anspruch 6, weiterhin mit einem Deflektor (130), der in einer Richtung der Bewegung der Erde benachbart zu der Tiefenführung (120) angeordnet ist.

12. Arbeitsgerät nach Anspruch 1, wobei das Erde bewegende Arbeitsgerät (110) eine erste Scheibe (111-1) zum Bewegen von Erde in einer ersten Richtung und eine zweite Scheibe (111-2) zum Bewegen von Erde in einer zweiten Richtung entgegengesetzt zur ersten Richtung aufweist.

13. Arbeitsgerät nach Anspruch 12, wobei die erste Scheibe (111-1) in einer Fahrtrichtung vor der zweiten Scheibe (111-2) angeordnet ist.

14. Arbeitsgerät nach Anspruch 1, wobei das Beaufschlagungslement (30) geeignet ausgebildet ist, um sowohl eine Hebekraft als auch eine Anpresskraft auf das Lagerelement (15) aufzubringen.

15. Arbeitsgerät nach Anspruch 14, wobei das Beaufschlagungslement (30) ein doppelt wirkender Luftzylinder ist.

## Revendications

1. Outillage destiné à déposer un fluide sur la rhizosphère de plantes dans un champ et à recouvrir ledit fluide, l'outillage comprenant :
un châssis (10) ;
un outillage (7) configuré de manière à distribuer des fluides ; et
un outillage de déplacement de terre (110) fixé sur le châssis (10) et disposé dans une zone centrale entre une première rangée de plantes et une seconde rangée de plantes et configuré de manière à déplacer la terre à partir d'un emplacement entre les rangées vers au moins la rhizosphère des plantes lorsque l'outillage de déplacement de terre traverse le champ, dans lequel l'outillage comprend, en outre, un élément vertical (18) fixé sur le châssis et s'étendant vers le bas vers le sol et un élément de support (15) fixé sur l'élément vertical au niveau de l'extrémité opposée sur le châssis, l'outillage de déplacement de terre (110) étant disposé sur l'élément de support, l'élément de support s'étendant vers l'arrière à l'opposé de la direction de déplacement, la longueur de l'élément de support étant configurée correctement pour que l'outillage de déplacement de terre (110) soit disposé après que le fluide a été appliqué sur les cultures en rangée, de telle sorte que la terre peut être déplacée afin de recouvrir le fluide ;
**caractérisé par** l'élément de support (15) fixé de manière à pouvoir pivoter sur l'élément vertical (18) et par un élément de précharge (30) disposé entre l'élément vertical et l'élément de support afin d'appliquer un effort sur l'outillage de déplacement de terre vers le sol.

2. Outillage selon la revendication 1, dans lequel l'outillage de déplacement de terre (110) comprend au moins un disque (111) afin de déplacer la terre vers au moins la rhizosphère des plantes.

3. Outillage selon la revendication 2, comprenant, en outre, un déflecteur (130) qui est disposé de manière adjacente au au moins un disque (111) suivant une direction de mouvement de la terre.

4. Outillage selon la revendication 1, dans lequel l'outillage de déplacement de terre (110) comprend au moins une charrue (112) afin de déplacer la terre vers au moins la rhizosphère des plantes.

5. Outillage selon la revendication 1, dans lequel l'outillage de déplacement de terre (110) comprend au moins un couteau (113) afin de déplacer la terre vers au moins la rhizosphère des plantes.

6. Outillage selon la revendication 1 comprenant, en outre, un guide de profondeur (120).

7. Outillage selon la revendication 6, dans lequel l'outillage de déplacement de terre (110) comprend au moins un disque (111) afin de déplacer la terre vers au moins la rhizosphère des plantes, et le guide de profondeur (120) comprend un vérin disposé de manière adjacente au au moins un disque.

8. Outillage selon la revendication 6, dans lequel l'outillage de déplacement de terre (110) comprend au moins un disque (111) afin de déplacer la terre vers au moins la rhizosphère des plantes et le guide de profondeur est un ski (121 ; 122) qui est fixé sur l'élément de support.

9. Outillage selon la revendication 8, dans lequel le ski (121) est disposé au-dessous de l'élément de support (15) et, en variante, est disposé sur l'élément de support (15) au niveau d'une extrémité arrière de l'élément de support suivant une direction de déplacement.

10. Outillage selon la revendication 6, dans lequel l'outillage de déplacement de terre (110) comprend au moins un disque (111) afin de déplacer la terre vers au moins la rhizosphère des plantes et le guide de profondeur (120) est une roue qui est fixée sur l'élément de support.

11. Outillage selon la revendication 6, comprenant, en outre, un déflecteur (130) qui est disposé de manière adjacente au guide de profondeur (120) suivant une direction de mouvement de la terre.

12. Outillage selon la revendication 1, dans lequel l'outillage de déplacement de terre (110) comprend un premier disque (111-1) destiné à déplacer la terre dans une première direction et un second disque (111-2) destiné à déplacer la terre dans une seconde direction opposée à la première direction.

13. Outillage selon la revendication 12, dans lequel le premier disque (111-1) est disposé à l'avant du second disque (111-2) suivant une direction de déplacement.

14. Outillage selon la revendication 1, dans lequel l'élément de précharge (30) est configuré de manière à appliquer à la fois un effort vers le haut et un effort vers le bas sur l'élément de support (15).

15. Outillage selon la revendication 14, dans lequel l'élément de précharge (30) est un vérin pneumatique à double action.
